(19) Europäisches Patentamt
European Patent Office
Office européen des brevets

(11) **EP 1 180 409 B1**

(12) **EUROPÄISCHE PATENTSCHRIFT**

(45) Veröffentlichungstag und Bekanntmachung des Hinweises auf die Patenterteilung:
**30.03.2005  Patentblatt 2005/13**

(51) Int Cl.⁷: **B23K 26/14**, B23K 26/06, B23K 26/12

(21) Anmeldenummer: **00117505.8**

(22) Anmeldetag: **12.08.2000**

(54) **Laserbearbeitungsmaschine mit gasgespültem Strahlführungsraum**

Laser processing machine with gas cleaned beam guiding cavity

Machine d'usinage au laser, avec enceinte de guidage du faisceau purgée par gaz

(84) Benannte Vertragsstaaten:
**AT CH DE FR GB IT LI**

(43) Veröffentlichungstag der Anmeldung:
**20.02.2002  Patentblatt 2002/08**

(73) Patentinhaber: **TRUMPF LASERTECHNIK GmbH**
**D-71254 Ditzingen (DE)**

(72) Erfinder: **von Borstel, Michael**
**74385 Pleidelsheim (DE)**

(74) Vertreter: **Kohler Schmid Möbus**
**Patentanwälte**
**Ruppmannstrasse 27**
**70565 Stuttgart (DE)**

(56) Entgegenhaltungen:
**EP-A- 0 749 800**      **DE-A- 4 001 091**
**DE-A- 4 305 107**      **GB-A- 2 163 692**
**US-A- 3 685 882**      **US-A- 4 467 171**

EP 1 180 409 B1

**Beschreibung**

Die Erfindung betrifft eine Laserbearbeitungsmaschine mit einem Laserresonator zur Erzeugung eines Laserstrahls, der aus einem Lasermode und Beugungsanteilen besteht, mit einem gasgespülten Strahlführungsraum, der an den Laserresonator angeschlossen ist, mit einem den Strahlführungsraum lichteintrittsseitig begrenzenden optischen Element zum Einkoppeln des Laserstrahls in den Strahlführungsraum, mit einer im Strahlführungsraum nahe dem optischen Element vorgesehenen Eintrittsöffnung für ein Spülgas und mit einer im Strahlführungsraum vorgesehenen Drosselstelle für das Spülgas, die gleichzeitig eine optische Blende bildet.

Eine derartige Laserbearbeitungsmaschine ist beispielsweise durch die US-A-3 685 882 bekannt geworden.

Ein auf ein optisches Element auftreffender Laserstrahl wird nicht vollständig reflektiert oder transmittiert, sondern ein geringer Teil wird auch absorbiert und führt zu einer Erwärmung des optischen Elements. Eine Verschmutzung des optischen Elements durch äußere Verunreinigungen bewirkt eine Erhöhung des Absorptionsgrads des Laserstrahls. Durch die zusätzlich absorbierte Laserleistung kann das optische Element beschädigt und seine Lebensdauer verringert werden. Außerdem ist die Laserleistung reduziert.

Aus der eingangs genannten US-A-3 685 882 ist ein Laserbearbeitungskopf einer Laserbearbeitungsmaschine bekannt, der einen gasgespülten Strahlführungsraum, eine den Strahlführungsraum lichteintrittsseitig begrenzende Linse zum Einkoppeln des Laserstrahls in den Strahtführungsraum, eine im Strahlführungsraum nahe der Linse vorgesehene Eintrittsöffnung für ein Spülgas und eine im Strahlführungsraum vorgesehene Drosselöffnung für das Spülgas aufweist, welche gleichzeitig eine optische Blende für den Laserstrahl bildet. Diese Öffnung wird in einer Platte durch den Laserstrahl selbst gebohrt, wobei der Öffnungsdurchmesser so klein wie möglich eingestellt wird, um die Gasgeschwindigkeit des Spülgases bei minimalem Gasdruck zu erhöhen und die notwendige Gasmenge zu reduzieren. Die durch den Laserstrahl selbst gebohrte Öffnung bildet eine Intensitätsblende, die überall dort offen ist, wo die Intensität des Laserstrahls ausreicht, die Platte "aufzubohren". Da die Intensitätsverteilung des Laserstrahls über den Strahlquerschnitt zeitlich nicht konstant ist, sondern fluktuiert, wird die Öffnung allerdings mit der Zeit immer weiter aufgebohrt. Der Laserstrahl ist durch die Linse auf das Werkstück fokussiert, um den Ort der höchsten Energiedichte, also die Strahltaille (Fokuspunkt) des Laserstrahls, auf die Werkstückoberfläche zu legen.

Aus der US-A-4 467 171 ist weiterhin eine Laserschneiddüse für einen Laserschneidkopf bekannt, deren Innenfläche konisch ausgebildet ist und mehrere Einlassöffnungen für ein Schneidgas aufweist. Die Düsenspitze ist sowohl innen als auch außen konisch gestaltet und weist an der Kegelspitze eine kleine Öffnung auf. Die Öffnung des Kegels ist so gewählt, dass die konvergierende Laserstrahlverteilung vollständig in den Kegel passt und der Laserstrahl nicht mit der Laserschneiddüse in Wechselwirkung tritt.

Schließlich ist aus der EP-A-0 749 800 noch eine Laserbearbeitungsmaschine bekannt, bei der ein Strahlführungsrohr mit Luft mit definiertem CO2-Gehalt beschickt wird. Diese Luft dient dazu, das Strahlführungsrohr zu spülen und dadurch den Laserstrahl von beeinträchtigenden Gasen und Partikeln freizuhalten. Die Einleitung der Luft in das Strahlführungsrohr erfolgt mittels einer Luftzufuhreinrichtung nahe einem optischen Fenster, über das der Laserstrahl aus einem Laserresonator in das Strahlführungsrohr ausgekoppelt wird. Am anderen Ende des Strahlführungsrohrs ist in der Rohrwand eine Austrittsöffnung für die Luft mit einer verstellbaren Austrittsblende vorgesehen, um die austretende Menge bzw. den im Innern des Strahlführungsrohrs herrschenden Überdruck zu regulieren.

Bei der Materialbearbeitung mittels Laser, beispielsweise beim Laserschneiden oder -schweißen, ist das Bearbeitungsergebnis von der Leistungsdichte und der Strahlqualität des Laserstrahls abhängig. Häufig ist es notwendig, den Strahlradius am Bearbeitungsort genau einzustellen, um das gewünschte Bearbeitungsergebnis zu erhalten. Ein Laserstrahl enthält neben dem Lasermode Beugungsanteile mit größerem Strahlradius und Fernfelddivergenz als der Lasermode. Wenn der Laserstrahl von einem optischen Element auf ein zu bearbeitendes Blech gebündelt wird, liegen die Beugungsanteile außerhalb des Strahlradius des Lasermode und führen zu einer unerwünschten Aufheizung des Blechs außerhalb des Strahlradius des Lasermode. An bekannten Laseranordnungen sind daher optische Blenden zur Strahlformung, insbesondere zum Herausfiltern von Beugungsanteilen, vorgesehen.

Der Erfindung liegt demgegenüber die Aufgabe zugrunde, eine Laserbearbeitungsmaschine der eingangs genannten Art derart weiterzubilden, dass der aus dem Strahtführungsraum austretende Laserstrahl möglichst frei von unerwünschten Beugungsanteilen, d.h. frei von Moden höherer Ordnung, ist.

Diese Aufgabe wird erfindungsgemäß dadurch gelöst, dass die optische Blende mit einem vorgegebenen Öffnungsdurchmesser ausgebildet und Beugungsanteile mit größerem Strahlradius und größerer Fernfelddivergenz als der Lasermode ausblendet, und dass der Laserstrahl auf die Blende fokussiert ist.

Durch die Blendeist der Strahlführungsraum geteilt, und nur der zwischen optischem Element und Blende liegende Teil des Strahlführungsraums wird mit Überdruck beaufschlagt. Entsprechend ist die zum Spülen benötigte Spülgasmenge reduziert. Die Zufuhr des Spülgases in den Strahlführungsraum erfolgt zweckmäßigerweise über eine Gaszufuhreinrichtung mit steuerbarer Durchflussmenge. Auf diese Art und Weise lässt sich der Druck in dem Strahlführungsraum so regulieren, dass dort ein Überdruck erzeugt wird und die Blendenöffnung eine Drosselstelle für das den Strahlführungsraum durchströmende Spülgas darstellt.

Vorzugsweise wird der Laserstrahl von einer Fokussiereinrichtung in Richtung auf die Blende gebündelt und an der Blendenöffnung gebeugt. Insbesondere bei langen Laserstrahlwegen kann der Strahlradius klein gehalten und der Laserstrahl mit geringen Verlusten auf die Fokussiereinrichtung geführt werden. Die Fokussiereinrichtung kann innerhalb des Strahlführungsraums oder in das optische Element integriert angeordnet sein. Im letzteren Fall kann der Strahlführungsraum entsprechend kleiner ausgeführt werden. Außerdem können die Leistungsverluste verringert werden, die bei jeder Abbildung an einem optischen Element auftreten. Die Fokussiereinrichtung, die den Laserstrahl in Richtung auf die Blende bündelt, kann mit einer Fokussiereinrichtung, die sich hinter der Blende befindet, zu einem Kepler-Teleskop kombiniert werden.

Die Blende braucht nicht im Fokus des Laserstrahls angeordnet zu sein, sondern kann z.B. auch vor dem Fokus positioniert werden, um den mit Überdruck beaufschlagten Teil des Strahlführungsraums weiter zu reduzieren. Bei bevorzugten Ausführungsformen ist die Blende innerhalb der Rayleighlänge von der Strahltaille des von der Fokussiereinrichtung fokussierten Laserstrahls entfernt angeordnet. Im Bereich der Strahltaille ist die räumliche Trennung zwischen Lasermode und den Beugungsanteilen am größten, so daß hier die Beugungsanteile herausgefiltert werden können und die Verluste beim Lasermode am geringsten sind.

Besonders vorteilhaft ist es, wenn Blende und Blendenöffnung verstellbar sind. Die Lage der Blende und auch die Blendenöffnung können an die Lage der Strahltaille des fokussierten Laserstrahls, die Laserleistung, die Bearbeitungsaufgabe und die Temperatur der Blende angepaßt werden. Insbesondere bei Anwendungen in der Materialbearbeitung ist es notwendig, den Strahlradius am Bearbeitungsort genau einzustellen, um das gewünschte Bearbeitungsergebnis zu erhalten.

Bei einer kreisförmigen Blendenöffnung ist der Durchmesser der Blendenöffnung vorzugsweise kleiner als etwa

$$\frac{4\ f\ \lambda}{\pi\ d\ K}\ *\ \begin{cases} \sqrt{2} \text{ in der Strahltaille} \\ 2 \text{ innerhalb der Rayleighlänge} \end{cases}$$

Dabei ist f die Brennweite der Fokussiereinrichtung, $\lambda$ die Laserwellenlänge, d der Durchmesser des Laserstrahls auf der Fokussiereinrichtung und K die Strahlkennzahl.

Wenn sichergestellt ist, daß das Spülgas den notwendigen Reinheitsgrad erfüllt, z.B. Helium, Stickstoff oder andere Edelgase, läßt sich das Spülgas auf das optische Element oder parallel am optischen Element vorbei in den Strahlführungsraum einströmen. Anderenfalls, wenn z.B. Druckluft oder gefilterte Abluft einer Vakuumpumpe, welche Lasergas aus dem Laserresonator absaugt, verwendet wird, sollte das Spülgas fort vom optischen Element, aber möglichst nahe am optischen Element vorbei in den Strahlführungsraum eingeströmt werden. Beispielsweise über eine an der Eintrittsöffnung vorgesehene Düse läßt sich das in den Strahlführungsraum einströmende Spülgas bezüglich dem optischen Element entsprechend ausrichten.

Bei besonders bevorzugten Ausführungsformen der Erfindung sind die Blende und die Drosselstelle durch eine Schneidgasdüse am Bearbeitungskopf der Laserbearbeitungsmaschine gebildet. Die Schneidgasdüse bildet gleichzeitig auch die optische Blende für den Laserstrahl, und das Spülgas dient gleichzeitig bei der Laserbearbeitung als Bearbeitungsgas, z.B. zum Austreiben von flüssigem Material aus der Schnittfuge eines mit dem Laserstrahl bearbeiteten Blechs.

Die Erfindung betrifft auch die Verwendung einer optischen Blende für einen Laserstrahl gleichzeitig als Drosselstelle für ein Spülgas sowie die Verwendung einer Schneidgasdüse als optische Blende für einen Laserstrahl und als Drosselstelle für ein gleichzeitig als Bearbeitungsgas dienendes Spülgas.

Weitere Vorteile ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigt:

Fig. 1    ein erstes Ausführungsbeispiel der erfindungsgemäßen Laserbearbeitungsmaschine, wobei der Bearbeitungskopf nicht dargestellt ist;

Fig. 2    ein zweites Ausführungsbeispiel der erfindungsgemäßen Laserbearbeitungsmaschine, wobei der Bearbeitungskopf nicht dargestellt ist;

Fig. 3    ein drittes Ausführungsbeispiel der erfindungsgemäßen Laserbearbeitungsmaschine, wobei der Bearbeitungskopf nicht dargestellt ist; und

Fig. 4    ein viertes Ausführungsbeispiel der erfindungsgemäßen Laserbearbeitungsmaschine.

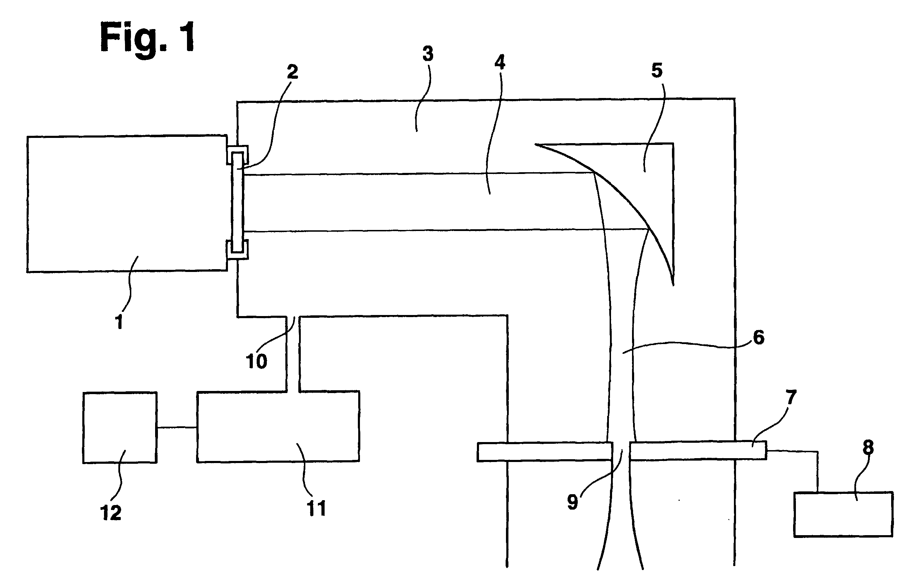

In der in **Figur 1** dargestellten Laserbearbeitungsmaschine wird ein Laserstrahl **4** aus einem Laserresonator **1** über ein optisches Element in Form eines Fensters **2** in einen Strahlführungsraum **3** eingekoppelt und auf eine Fokussiereinrichtung **5** in Form eines Fokussierspiegels gelenkt. Der Fokussierspiegel bündelt den Laserstrahl 4 in Richtung auf eine Blende **7** im Strahlführungsraum 3. Die Blende 7 ist innerhalb der Rayleighlänge von der Strahltaille des fokussierten Laserstrahls **6** entfernt angeordnet, wodurch die Ausblendung der Beugungsanteile mit geringen Leistungsverlusten für den Lasermode möglich ist. Die Blendenöffnung **9** ist über eine Stelleinrichtung **8** verstellbar und wird so klein gewählt, daß die Beugungsanteile ausgeblendet werden. Über eine Eintrittsöffnung **10** strömt ein Spülgas aus einer Gaszufuhreinrichtung **11** in den Strahlführungsraum 3 ein und durch die Blendenöffnung 9 hindurch. Das Spülgas dient dazu, die Oberfläche des optischen Fensters 2 von Verunreinigungen freizuhalten, die den Absorptionsgrad des optischen Fensters 2 erhöhen und damit die Lebensdauer des optischen Fensters 2 reduzieren und den Laserstrahl beeinträchtigen. In der dargestellten Ausführung strömt das Spülgas etwa parallel zur planen Oberfläche des optischen Fensters 2, d.h. etwa rechtwinklig zur optischen Achse des optischen Fensters 2, aus der Eintrittsöffnung 10 aus. In anderen Ausführungen ist das Spülgas auf oder fort von der Oberfläche des optischen Fensters 2 gerichtet. Die Spülgaszufuhr wird über eine Stelleinrichtung **12** so reguliert, daß in dem Strahlführungsraum 3 gegenüber außen ein Überdruck herrscht und die Blendenöffnung 9 eine Drosselstelle für das Spülgas bildet. Durch den im Strahlführungsraum 3 herrschenden Überdruck wird dem Eindringen von Verunreinigungen von außen in den Strahlführungsraum 3 entgegengewirkt. Als Spülgase werden z.B. Druckluft, gefilterte Abluft einer Vakuumpumpe, welche Lasergas aus dem Laserresonator absaugt, Helium, Stickstoff oder andere Edelgase eingeströmt. Wird das Spülgas auf das optische Fenster 2 oder parallel zu dessen Oberfläche in den Strahlführungsraum 3 eingeströmt, werden bevorzugt Spülgase mit hohem Reinheitsgrad eingesetzt. Wird das Spülgas dagegen fort vom optischen Fenster 2 in den Strahlführungsraum 3 eingeströmt, können auch Spülgase mit geringerem Reinheitsgrad eingesetzt werden. Bevorzugt befindet sich die Eintrittsöffnung **10** des Spülgases möglichst nahe am optischen Fenster 2, da dann die Schutzwirkung für das optische Fenster 2 vor Verunreinigungen am größten ist.

Bei einer kreisförmigen Blendenöffnung 9 ist der Durchmesser der Blendenöffnung vorzugsweise kleiner als etwa

$$\frac{4\,f\,\lambda}{\pi\,d\,K} \; * \; \begin{cases} \sqrt{2} \;\; \text{in der Strahltaille} \\ 2 \;\; \text{innerhalb der Rayleighlänge} \end{cases}$$

Dabei ist f die Brennweite der Fokussiereinrichtung 5, $\lambda$ die Laserwellenlänge, d der Durchmesser des Laserstrahls und K die Strahlkennzahl.

Bei einer eingestellten Durchflußmenge von Stickstoffgas ($N_2$) in den Strahlführungsraum 3 von 35 l/min wurden in Abhängigkeit des Öffnungsdurchmessers der Blende 7 vor der Blende 7 folgende Drükke im Strahlführungsraum 3 gemessen:

| Öffnungsdurchmesser der Blende [mm] | Überdruck vor der Blende [mbar] |
|---|---|
| 0,95 | 4500 |
| 1,6 | 1100 |
| 1,9 | 550 |
| 2,3 | 250 |
| 4, 0 | 73 |
| 4,5 | 64 |
| 5,0 | 58 |
| 5,5 | 56 |
| 6, 0 | 53 |

Die gemessene Abhängigkeit des Drucks im Strahlführungsraum 3 vom Öffnungsdurchmesser der Blende 7 zeigt, dass bei konstantem Druck im Strahlführungsraum 3 bei kleinerem Öffnungsdurchmesser weniger Gas notwendig ist. Wird die Gasmenge konstant gehalten und der Öffnungsdurchmesser verkleinert, wird eine höhere Schutzwirkung des optischen Fensters 2 erreicht.

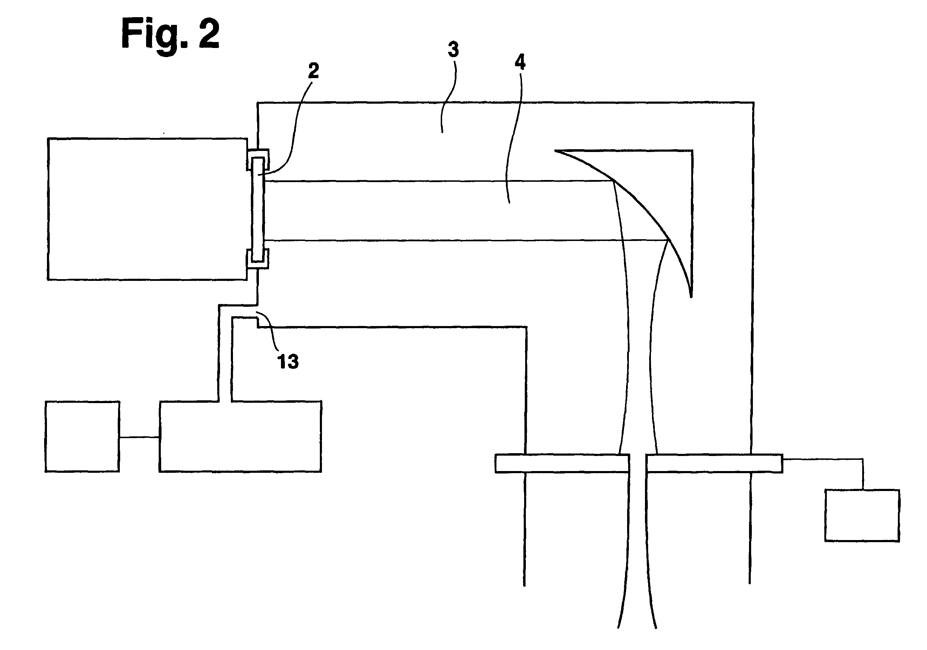

Die in **Figur 2** dargestellte Laserbearbeitungsmaschine unterscheidet sich von der Laserbearbeitungsmaschine nach Figur 1 dadurch, daß sich die Eintrittsöffnung **13** für das Spülgas parallel zur optischen Achse des optischen Fensters 2 in den Strahlführungsraum 3 öffnet. Das Spülgas wird so über die Eintrittsöffnung 13 fort vom optischen Fenster 2 in den Strahlführungsraum 3 eingeströmt. Diese Anordnung der Eintrittsöffnung 13 bietet den Vorteil, daß auch Spülgase mit niedrigerem Reinheitsgrad, wie z.B. Druckluft oder die gefilterte Abluft einer Vakuumpumpe, welche Lasergas aus dem Laserresonator absaugt, eingeströmt werden können, da das Spülgas nicht auf das optische Fenster 2 gerichtet ist.

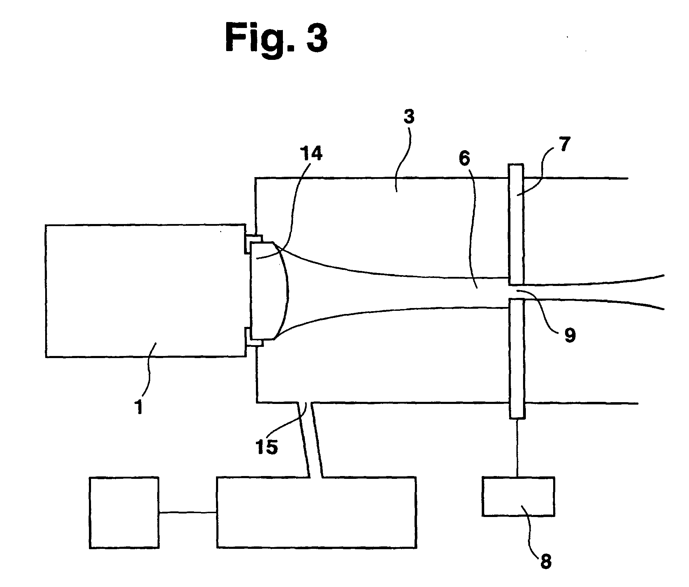

Die in **Figur 3** dargestellte Laserbearbeitungsmaschine unterscheidet sich von der Laserbearbeitungsmaschine nach Figur 1 dadurch, daß das optische Fenster und die Fokussiereinrichtung durch ein einziges optisches Element **14** ersetzt sind und daß die Eintrittsöffnung **15** für das Spülgas, z.B. mittels einer Düse, auf die Oberfläche des optischen Elements 14 gerichtet ist. Der Laserstrahl tritt ausgehend vom Laserresonator 1 über das optische Element 14 in den Strahlführungsraum 3 ein. Der Laserstrahl wird vom optischen Element 14 fokussiert und auf die Blende 7, die im Strahlengang des fokussierten Laserstrahls 6 angeordnet ist, gerichtet. Durch das auf die Oberfläche des optischen Elementes 14 auftreffende Spülgas wird der Ablagerung von Verunreinigungen auf dem optischen Element 14 entgegengewirkt.

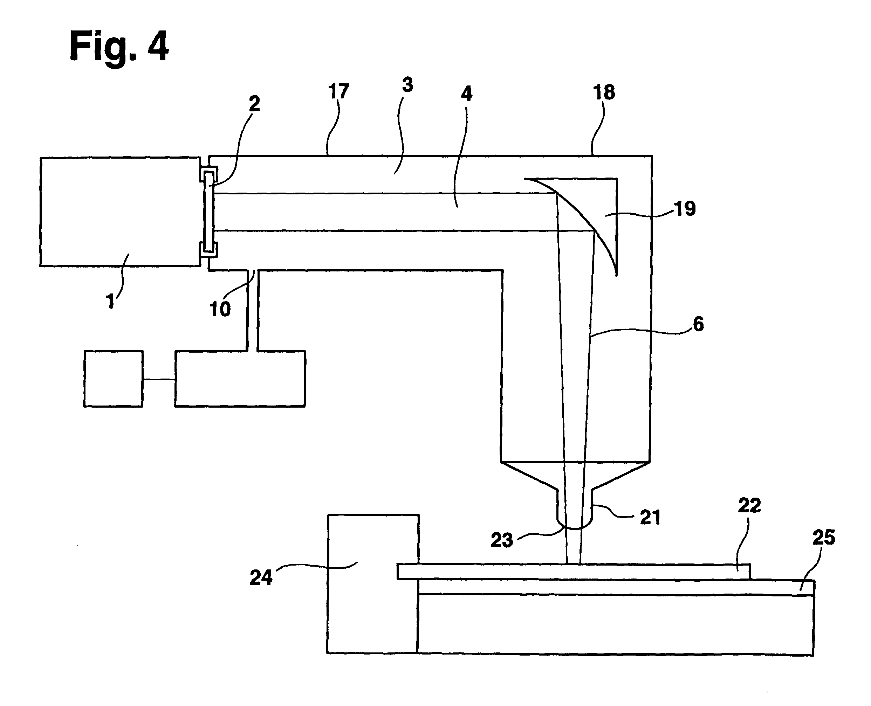

Bei der in **Figur 4** schematisch dargestellten Laserbearbeitungsmaschine wird der Laserstrahl 4 über das optische Fenster 2 aus dem Laserresonator 1 ausgekoppelt und tritt in ein Strahlführungsrohr **17** ein. An dessen Ende wird der Laserstrahl 4 in einen Schneidkopf **18** eingekoppelt. Der Laserstrahl 4 wird im Innern des Schneidkopfs 18 mittels einer Fokussiereinrichtung in Form eines Fokussierspiegels **19** durch eine Blende **21** auf ein zu bearbeitendes Blech **22** gebündelt. Der Schneidkopf 18 und das Blech **22** sind relativ zueinander verschiebbar. Im abgebildeten Beispiel bleiben der Schneidkopf 18 und das Strahlführungsrohr 17 während der Bearbeitung des Blechs ortsfest. Daneben besteht die Möglichkeit, das Blech während der Bearbeitung ortsfest zu lassen und den Schneidkopf mit dem Strahlführungsrohr zu bewegen. Das Blech 22 ist an einem Koordinatenvorschub **24** relativ zu dem Schneidkopf 18 verschiebbar eingespannt und auf einer Werkstückauflage **25** gelagert. Das Strahlführungsrohr 17 und der Schneidkopf 18 bilden zusammen den Strahlführungsraum 3, in den das Spülgas über die Eintrittsöffnung 10 am Strahlführungsrohr 17 ein- und über die Blendenöffnung 23 am Schneidkopf 18 wieder ausströmt. Die Spülgaszufuhr in den Strahlführungsraum 3 wird so reguliert, daß dort gegenüber außen ein Überdruck herrscht und die Blendenöffnung 23 eine Drosselstelle für das Spülgas bildet. Im dargestellten Ausführungsbeispiel dient das Spülgas, das über die düsenförmig ausgebildete Blende 21 auf das Blech 22 gerichtet wird, gleichzeitig als Schneidgas zum Austreiben des flüssigen Materials aus der mit dem Laserstrahl im Blech 22 erzeugten Schnittfuge. Die Strahltaille des fokussierten Laserstrahls 6 befindet sich nicht am Ort der Blende 7, sondern ihre Lage ist durch die Lage des Blechs 22 und die Bearbeitungsaufgabe festgelegt.

## Patentansprüche

1. Laserbearbeitungsmaschine mit einem Laserresonator (1) zur Erzeugung eines Laserstrahls (4), der aus einem Lasermode und Beugungsanteilen besteht, mit einem gasgespülten Strahlführungsraum (3), der an den Laserresonator (1) angeschlossen ist, mit einem den Strahlführungsraum (3) lichteintrittsseitig begrenzenden optischen Element (2; 14) zum Einkoppeln des Laserstrahls (4) in den Strahlführungsraum (3), mit einer im Strahlführungsraum (3) nahe dem optischen Element (2; 14) vorgesehenen Eintrittsöffnung (10; 13; 15) für ein Spülgas und mit einer im Strahtführungsraum (3) vorgesehenen Drosselstelle für das Spülgas, die gleichzeitig eine optische Blende (7; 21) bildet,
**dadurch gekennzeichnet,**
**dass** die optische Blende (7; 21) mit einem vorgegebenen Öffnungsdurchmesser ausgebildet und Beugungsanteile mit größerem Strahlradius und größerer Fernfelddivergenz als der Lasermode ausblendet, und dass der Laserstrahl (4) auf die Blende (7; 21) fokussiert ist.

2. Laserbearbeitungsmaschine nach Anspruch 1, **dadurch gekennzeichnet, daß** eine Fokussiereinrichtung (5; 14; 19) in das optische Element (14) integriert oder innerhalb des Strahlführungsraums (3) angeordnet ist.

3. Laserbearbeitungsmaschine nach Anspruch 1 oder 2, **dadurch gekennzeichnet, daß** die Blende (7; 21) innerhalb der Rayleighlänge von der Strahltaille des fokussierten Laserstrahls (6) entfernt angeordnet ist.

4. Laserbearbeitungsmaschine nach einem der vorhergehenden Ansprüche, **dadurch gekennzeichnet, daß** die Blendenöffnung (9; 23) mittels einer Stelleinrichtung (8) verstellbar ist.

5. Laserbearbeitungsmaschine nach einem der vorhergehenden Ansprüche, **dadurch gekennzeichnet, daß** die Blendenöffnung (9; 23) kreisförmig ist und ihr Durchmesser kleiner als

$$\frac{4\ f\ \lambda}{\pi\ d\ K}\ *\ \begin{cases} \sqrt{2}\ \text{in der Strahltaille} \\ 2\ \text{innerhalb der Rayleighlänge} \end{cases}$$

ist.

6. Laserbearbeitungsmaschine nach einem der vorhergehenden Ansprüche, **dadurch gekennzeichnet, daß** die Eintrittsöffnung (10; 13; 15) das in den Strahlführungsraum (3) einströmende Spülgas auf das optische Element (2; 14), parallel zur Oberfläche des optischen Elements (2; 14) oder fort vom optischen Element (2; 14) richtet.

7. Laserbearbeitungsmaschine nach einem der vorhergehenden Ansprüche, **dadurch gekennzeichnet, daß** die Blende (21) und die Drosselstelle durch eine Schneidgasdüse am Schneidkopf (18) der Laserbearbeitungsmaschine gebildet sind und daß das Spülgas gleichzeitig bei der Laserbearbeitung als Bearbeitungsgas dient.

8. Verfahren zum Schutz eines im gasgespülten Strahlführungsraum (3) eines Laserstrahls (4) vorgesehenen optischen Elements (2; 14) vor Verunreinigungen in einer Laserbearbeitungsmaschine nach einem der Ansprüche 1-7, **dadurch gekennzeichnet,**
**daß** der Druck des den Strahlführungsraum (3) durchströmenden Spülgases so eingestellt wird, daß eine im Strahlführungsraum (3) zur Strahlformung des Laserstrahls (4) vorgesehene optische Blende (7; 21) gleichzeitig als Drosselstelle für das Spülgas wirkt.

9. Verwendung einer Laserbearbeitungsmaschine nach einem der Ansprüche 1-7, wobei eine optische Blende (7) für einen Laserstrahl (4) gleichzeitig als Drosselstelle für ein Spülgas zum Spülen eines Strahlführungsraums (3) dient.

10. Verwendung einer Laserbearbeitungsmaschine nach einem der Ansprüche 1-7, wobei eine Schneidgasdüse als optische Blende (21) für einen Laserstrahl (4) und als Drosselstelle für ein gleichzeitig als Bearbeitungsgas dienendes Spülgas zum Spülen eines Strahlführungsraums (3) dient.

**Claims**

1. Laser processing machine comprising a laser resonator (1) for generating a laser beam (4) consisting of a laser mode and diffraction components, a gas-flushed beam-guiding chamber (3) connected to the laser resonator (1), an optical element (2; 14) delimiting the beam-guiding chamber (3) on the beam-input side for coupling the laser beam (4) into the beam-guiding chamber (3), a flushing-gas intake opening (10; 13; 15) provided in the beam-guiding chamber (3) near the optical element (2; 14) and a flushing-gas throttling point provided in the beam guiding chamber (3) and simultaneously also serving as an optical diaphragm (7; 21),
**characterized in**
**that** the optical diaphragm (7; 21) has a predetermined opening diameter and fades out diffraction components having a larger beam diameter and larger distant field divergence than the laser mode, and that the laser beam (4) is focussed onto the diaphragm (7; 21).

2. Laser processing machine as in claim 1, **characterized in that** a focussing device (5; 14; 19) is integrated into the optical element (14) or is positioned within the beam guiding chamber (3).

3. Laser processing machine as in claim 1 or 2, **characterized in that** the diaphragm (7; 21) is positioned at a distance within the Rayleigh length from the neck of the focussed laser beam (6).

4. Laser processing machine as in one of the preceding claims, **characterized in that** the diaphragm aperture (9;

23) can be adjusted by means of a control device (8).

5. Laser processing machine as in one of the preceding claims, **characterized in that** the diaphragm aperture (9; 23) is circular and its diameter is smaller than

$$\frac{4\,f\,\lambda}{\pi\,d\,K} \, * \, \begin{cases} \sqrt{2} & \text{at the neck of the beam} \\ 2 & \text{within the Rayleigh length.} \end{cases}$$

6. Laser processing machine as in one of the preceding claims, **characterized in that** the intake opening (10; 13; 15) directs the flushing gas flowing into the beam guiding chamber (3) at the optical element (2; 14), parallel to the surface of the optical element (2; 14) or away from the optical element (2; 14).

7. Laser processing machine as in one of the preceding claims, **characterized in that** the diaphragm (21) and the throttling point are constituted of a cutting-gas nozzle on the cutting head (18) of the laser processing machine and that the flushing gas simultaneously also serves as a processing gas in the laser cutting process.

8. Method for protecting an optical element (2; 14) in a gas-flushed beam-guiding chamber (3) of a laser beam (4) tram contamination in a laser processing machine as in one of the claims 1 to 7,
**characterized in**
**that** the pressure of the flushing gas flowing through the beam guiding chamber (3) is so selected that an optical diaphragm (7; 21) provided in the beam guiding chamber (3) for shaping the laser beam (4) simultaneously serves as a flushing-gas throttling point.

9. Utilization of a laser processing machine as in one of the claims 1 to 7, wherein an optical diaphragm (7) for a laser beam (4) simultaneously also serves as a flushing-gas throttling point for flushing a beam guiding chamber (3).

10. Utilization of a laser processing machine as in one of the claims 1 to 7, wherein a cutting-gas nozzle serves both as an optical diaphragm (21) for a laser beam (4) and as a throttling point for a flushing gas flushing a beam guiding chamber (3) and simultaneously also serving as a processing gas.

**Revendications**

1. Machine d'usinage au laser avec un résonateur laser (1) pour générer un faisceau laser (4) qui se compose d'un mode laser et de composantes diffractées, avec une chambre de guidage de faisceau (3) purgée au gaz qui est raccordée au résonateur laser (1), avec un élément optique (2 ; 14) limitant la chambre de guidage de faisceau (3) côté entrée de la lumière pour injecter le faisceau laser (4) dans la chambre de guidage de faisceau (3), avec une ouverture d'entrée (10 ; 13 ; 15) pour un gaz de purge prévue dans la chambre de guidage de faisceau (3) à proximité de l'élément optique (2 ; 14) et avec un étranglement pour le gaz de purge prévu dans la chambre de guidage de faisceau (3) qui forme en même temps un diaphragme optique (7 ; 21),
**caractérisée par le fait**
**que** le diaphragme optique (7 ; 21) est formé avec un diamètre d'ouverture défini à conserver et supprime les composantes diffractées de plus grand diamètre de faisceau et plus grande divergence de champ distant que le mode laser et que le faisceau laser (4) est focalisé sur le diaphragme (7 ; 21).

2. Machine d'usinage au laser selon la revendication 1, **caractérisée par le fait qu'**un dispositif de focalisation (5 ; 14; 19) est intégré dans l'élément optique (14) ou disposé à l'intérieur de la chambre de guidage de faisceau (3).

3. Machine d'usinage au laser selon la revendication 1 ou 2, **caractérisée par le fait que** le diaphragme (7 ; 21) est disposé à une distance du col de faisceau du faisceau laser focalisé (6) comprise entre les limites de la longueur de Rayleigh.

4. Machine d'usinage au laser selon l'une des revendications précédentes, **caractérisée par le fait que** l'ouverture de diaphragme (9 ; 23) est réglable au moyen d'un dispositif de réglage (8).

5. Machine d'usinage au laser selon l'une des revendications précédentes, **caractérisée par le fait que** l'ouverture de diaphragme (9 ; 23) est circulaire et que son diamètre est inférieur à

$$\frac{4 f \lambda}{\pi d K} * \begin{cases} \sqrt{2} \\ 2 \end{cases}$$

($\sqrt{2}$ au col de faisceau, 2 dans les limites de la longueur de Rayleigh)

6.  Machine d'usinage au laser selon l'une des revendications précédentes, **caractérisée par le fait que** l'ouverture d'entrée (10 ; 13 ; 15) dirige le gaz de purge qui afflue dans la chambre de guidage de faisceau (3) sur l'élément optique (2 ; 14), parallèlement à la surface de l'élément optique (2 ; 14) ou loin de l'élément optique (2 ; 14).

7.  Machine d'usinage au laser selon l'une des revendications précédentes, **caractérisée par le fait que** le diaphragme (21) et l'étranglement sont formés par une buse de gaz de coupe sur la tête de coupe (18) de la machine d'usinage au laser et que le gaz de purge sert en même temps de gaz d'usinage lors de l'usinage au laser.

8.  Procédé pour protéger contre la salissure un élément optique (2 ; 14) prévu dans la chambre de guidage de faisceau (3) purgée au gaz d'un faisceau laser (4) dans une machine d'usinage au laser selon l'une des revendications 1 à 7,
    **caractérisé par le fait**
    **que** la pression du gaz de purge traversant la chambre de guidage de faisceau (3) est réglée de telle façon qu'un diaphragme optique (7 ; 21) prévu dans la chambre de guidage de faisceau (3) pour la formation du faisceau laser (4) agit en même temps comme étranglement pour le gaz de purge.

9.  Utilisation d'une machine d'usinage au laser selon l'une des revendications 1 à 7 dans laquelle un diaphragme optique (7) pour un faisceau laser (4) sert en même temps d'étranglement pour un gaz de purge prévu pour purger une chambre de guidage de faisceau (3).

10.  Utilisation d'une machine d'usinage au laser selon l'une des revendications 1 à 7 dans laquelle une buse de gaz de coupe sert de diaphragme optique (21) pour un faisceau laser (4) et d'étranglement pour un gaz de purge prévu pour purger une chambre de guidage de faisceau (3) et servant en même temps de gaz d'usinage.

Fig. 1

Fig. 2

EP 1 180 409 B1

# Fig. 3

Fig. 4